# EUROPÄISCHE PATENTANMELDUNG

(11) **EP 2 813 780 A1**
(43) Veröffentlichungstag der Anmeldung: **17.12.2014**
(21) Anmeldenummer: 13171765.4
(22) Anmeldetag: 12.06.2013
(51) Int. Cl.: F24J 2/04, F24J 2/05, F24J 2/20, F24J 2/24, F24J 2/26, F24J 2/46

(54) **Solarthermie-Glaselement**

(71) Anmelder: ELASKON Sachsen GmbH & Co.KG, 01237 Dresden (DE); Maiwald Beratung + Planung, 01324 Dresden (DE)
(72) Erfinder: Schwald, Karl, 01454 Ullersdorf (DE); Maiwald, Holger, 01324 Dresden (DE); Becker, Stefan, 40485 Düsseldorf (DE); Seifert, Knut, 01796 Graupa (DE); Ott, Thomas, 01257 Dresden (DE); Pfaltz, Dieter, 01471 Großdittmannsdorf (DE); Fritz, Erich, 09599 Freiberg (DE); Pusch, Jens, 01239 Dresden (DE)
(74) Vertreter: Weissfloh, Ingo

(57) **Zusammenfassung**

Solarthermie-Glaselement für Dacheindeckungen, Hauswandgestaltungen und Freiflächenanlagen.

Aufgabe der Erfindung ist es, insbesondere für die Dacheindeckung Glaselemente zu schaffen, die den üblichen Dachziegeln in Form und Farbe angepasst sind und gleichzeitig als Solarthermie-Glaselemente eingesetzt werden können. Diese Glaselemente können in herkömmlicher Dachziegelgröße, aber auch in wesentlich größerer Ausführung hergestellt und verarbeitet werden.

Das Solarthermie-Glaselement (1) wird durch ein Glasrohrsystem (3), welches durch parallel angeordnete Stege (10) innerhalb des Glashohlkörpers (6) gebildet. An den gegenüberliegenden Schmalseiten (11, 15) befinden sich jeweils mindestens ein Eingang (7) und ein Ausgang (8). Durch parallel angeordnete Stege (10), die abwechselnd an den Schmalseiten (11, 15) nicht bis an die Außenwand der Gegenseite geführt sind, bilden somit ein mäanderförmiges Rohrsystem (3) innerhalb des Glashohlkörpers (6). Zusätzlich sind Rinnen (12), seitliche Abdichtkanten (13) und Traufkanten (14) vorgesehen. Diese Elemente dienen zur sicheren Regenwasserabführung.

## Beschreibung

Solarthermie-Glaselement für Dacheindeckungen, Hauswandgestaltungen und Freiflächenanlagen.

Reine Glaselemente für Solarthermie-Anlagen sind in der Praxis nicht bekannt. Hybridanlagen von Photovoltaik-Anlagen und Solarthermie-Anlagen sind in der Patentliteratur beschrieben. So z. B. in der Schrift DE 20 2010 016 159 U1 oder in der DE 10 2007 036 713 A1, wobei aber keine Aussagen zum Aufbau der Solarthermie-Anlage im Detail erfolgt. In der DE 20 2010 016 159 U1 ist die Thermieanlage räumlich im Bereich hinter den Dachelementen mit den Solarzellen angeordnet. Die Thermieanlage besitzt einen direkten Kontakt mit den Dachelementen.

Einen ähnlichen Aufbau besitzt die Solar-Hybridanlage nach der Schrift DE 10 2007 036 713 A1. Die durch die Thermieanlage erzeugte Kühlung durch den direkten Kontakt mit solarelektrischen Elementen erhöht deren Wirkungsgrad.

Aufgabe der Erfindung ist es, insbesondere für die Dacheindeckung Glaselemente zu schaffen, die den üblichen Dachziegeln in Form und Farbe angepasst sind und gleichzeitig als Solarthermie-Glaselemente eingesetzt werden können. Diese Glaselemente können in herkömmlicher Dachziegelgröße, aber auch in wesentlich größerer Ausführung hergestellt und verarbeitet werden.

Die erfindungsgemäße Lösung ermöglicht eine kostengünstige Herstellung entsprechender Glaselemente in beliebiger Form, Abmessung, Farbgestaltung, jeweils angepasst an herkömmliche Dacheindeckungselemente. Weiterhin ist der Einsatz der erfindungsgemäßen Solarthermie-Glaselemente als Wandgestaltungselemente im Wohnungs- und Industriebau, aber auch in Freiflächenanlagen möglich. Beim Einsatz von großformatigen Glaselementen ist eine wesentlich schnellere Dacheindeckung gegenüber der traditionellen Ausführung mit kleinformatigen Dachziegeln möglich. Die Halterung der Solarthermie-Glaselemente kann durch beliebige Verbindungselemente, wie Schrauben oder Spannelemente, aber auch durch Klebetechniken erfolgen. Ein Vorteil bei der Herstellung der Solarthermie-Glaselemente ist der Einsatz von Altglas. Weiterhin ist auch eine Hybridausführung mit der Kombination Solarthermie mit der Photovoltaik möglich.

Vorteilhafte Ausgestaltungen der Erfindung sind neben dem Nebenanspruch 4 in den Ansprüchen 2 und 3 und 5 bis 11 dargestellt. Nach Anspruch 2 ist unter dem Glasrohrsystem eine weitere Glasplatte vorgesehen, die insgesamt zu einer Stabilitätserhöhung des Solarthermie-Glaselements führt. Bei der Weiterbildung nach Anspruch 3 dienen Glasstege und Glasstützen zwischen den Glasrohren dem gleichen Zweck. Nach Anspruch 5 besitzt das Solarthermie-Glaselement an der Oberseite die Struktur herkömmlicher Dachziegel und nach Anspruch 6 können die Solarthermie-Glaselemente eingefärbt sein bzw. eine fotografische Imitation eines Ziegeldaches besitzen. Beide Ausführungsformen ermöglichen den Einsatz der Solarthermie auf Dächern, ohne dass die herkömmliche Dachstruktur verändert wird. Die Dachlandschaft passt sich somit trotz des Einsatzes der Solarthermie der traditionellen Bauform an. Durch den Einsatz von Metalldrähten, Metallbändern und/oder Metallgeflechten in den Solarthermie-Glaselementen kann nach Anspruch 7 die Stabilität des Solarthermie-Glaselements erhöht werden. Bei der Weiterbildung nach Anspruch 8 kann durch Aufrauung der Unterseite des Solarthermie-Glaselements der Lichteintritt in Richtung des Wärmeträgers, also dem Glasrohrsystem, reflektiert werden und somit der Wirkungsgrad insgesamt erhöht werden. Die Führung der Rohre des Glasrohrsystems parallel oder in Mäanderform richtet sich nach Anspruch 9 nach thermischen Gesichtspunkten unter Beachtung der Verbindungstechnik von Solarthermie-Glaselement zu Solarthermie-Glaselement. Die Einhängeelemente nach Anspruch 10 dienen zur Verankerung des Solarthermie-Glaselements auf der Dachkonstruktion und gleichzeitig als Befestigungselemente an weiteren Dachelementen. Dies kann in Verbindung mit den unterschiedlichsten Verbindungstechniken erfolgen. Die Weiterbildung nach Anspruch 11 bezieht sich auf ein Solarthermie-Glaselement in der Ausführungsform eines Glashohlkörpers. Durch die speziell angeordneten Stege ergibt sich ein mäanderförmiges Rohrsystem in einem vorteilhaften Herstellungsverfahren. Bei der Weiterbildung nach Anspruch 12 besitzt die untere Glasplatte bzw. die Unterseite des Glashohlkörpers ähnlich den Pfalzziegeln ein Einrastsystem der Glaselemente untereinander und ein sicheres Regenwasserabflusssystem. Somit kann kein Regenwasser unter die Solarthermie-Glaselemente eindringen. Zur Kopplung der Solarthermie-Anlage können zumindest Teile der Oberfläche mit folienartigen Photovoltaikzellen versehen sein und somit eine Hybridanlage ermöglichen. Nach Anspruch 13 sind zumindest auf Teilen der Oberfläche der Solarthermie-Glaselemente folienartige Photovoltaikzellen vorgesehen. Somit lassen sich die Vorteile der Photovoltaik und der Solarthermie an den Solarthermie-Glaselementen miteinander kombinieren. Durch die besondere Ausführung der Solarthermie-Glaselemente nach Anspruch 14 sind die konstruktiven Besonderheiten für den effizienten Fluidstrom mit den baulichen und montageseitigen Besonderheiten kombiniert. Hierdurch lassen sich einfach zu montierende und zuverlässig einsetzbare Solarthermie-Glaselemente herstellen, welche den besonderen Anforderungen der Dacheindeckung gerecht werden. Indem nach Anspruch 15 Einscheiben-, Zweischeiben- und/oder Mehrscheiben-Sicherheitsglas Anwendung findet, wird die Haltbarkeit gegen Witterungseinflüsse und die Sicherheit gegen Zerstörung durch Elementarschschäden erhöht.

Mehrere Ausführungsbeispiele der Erfindung sind in den Zeichnungen dargestellt und werden im Folgenden näher beschrieben. Es zeigen:

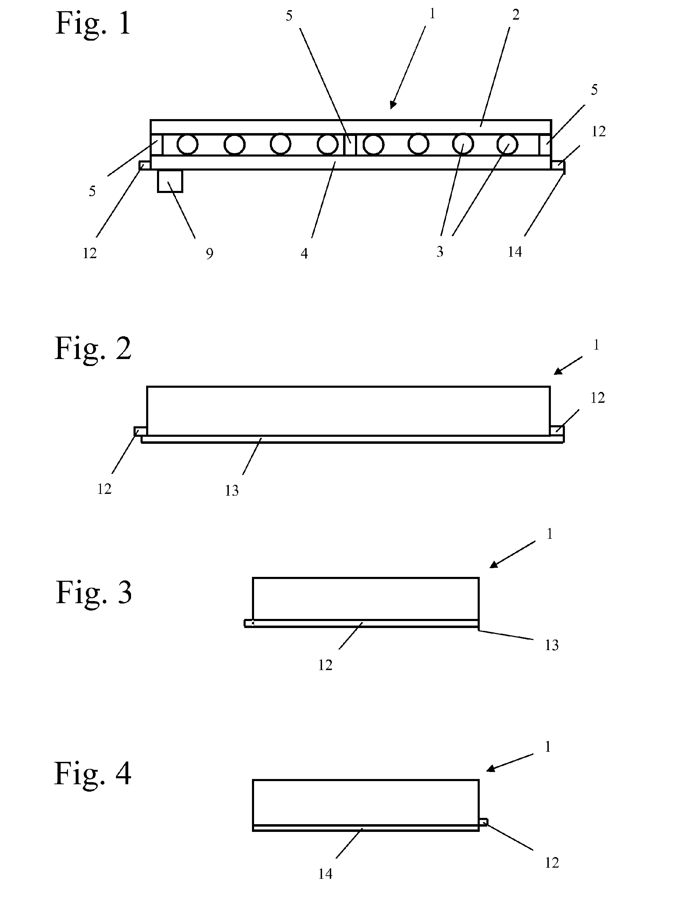

Fig. 1 Schnittdarstellung eines Solarthermie-Glaselements mit zwei Glasplatten und dazwischenliegendem Glasrohrsystem und Stützstegen bzw. Glasstützen,
Fig. 2 die Längsseitenansicht eines Solarthermie-Glaselementes,
Fig. 3 die obere Seitenansicht eines Solarthermie-Glaselementes,
Fig. 4 die untere Seitenansicht eines Solarthermie-Glaselementes,
Fig. 5 die Draufsicht auf ein aufgeschnittenes Solarthermie-Glaselement mit parallel verlaufenden Stegen, die ein mäanderförmiges Rohrsystem innerhalb des Glashohlkörpers bilden und
Fig. 6 die Schnittdarstellung eines Solarthermie-Glaselementes mit zwischen zwei an den Längskanten gekanteten Glasplatten parallel verlaufenden Stegen, die ein mäanderförmiges Rohrsystem innerhalb des Glashohlkörpers bilden.

Das Solarthermie-Glaselement 1 besitzt in seiner einfachsten Ausführung nur eine Glasplatte 2 an dessen Unterseite eine Glasrohrsystem 3 befestigt ist. Diese Ausführung kann durch eine untere Glasplatte 4 verstärkt sein. Zur Stabilisierung dieser Ausführungen sind Glasstege bzw. Glasstützen zwischen den beiden Glasplatten 2 und 4 angeordnet. Hierbei können die äußeren Glasstege 5 gleich als Außenwand dienen.

Das Solarthermie-Glaselement 1 besteht in einer Variante vorteilhaft aus einem Glashohlkörper 6 mit einem eingelegten Glasrohrsystem 3, wobei das Glasrohrsystem 3 mindestens jeweils einen Eingang 7 und einen Ausgang 8 nach außerhalb des Glashohlkörpers 6 besitzt.

Das Solarthermie-Glaselement 1 kann jedoch innerhalb des Glashohlkörpers 6 parallel angeordnete Stege 10 besitzen. Die Stege 10 sind parallel angeordnet und reichen abwechselnd an den Schmalseiten 11, 15 nicht bis an die Außenwand der Gegenseite. Somit ist ein mäanderförmiges Rohrsystem 3 innerhalb des Glashohlkörpers 6 gebildet. An den gegenüberliegenden Schmalseiten 11 und 15 sind mindestens jeweils ein Eingang 7 und ein Ausgang 8 vorgesehen.

Das Solarthermie-Glaselement 1 besitzt vorteilhaft ähnlich wie bei Falzziegeln entsprechende Elemente zum Verhaken der Glaselemente untereinander und zur sicheren Regenwasserableitung. Die untere Glasplatte 4 ist hierzu größer als die obere Glasplatte 2 und mit einem Rand nach oben versehen bzw. die Unterseite des Glashohlkörpers 6 ist größer als der Glashohlkörper 6 ausgebildet und mit einem Rand nach oben versehen und zwar in der Form, dass an der oberen Schmalseite 11 und an einer Längsseite eine Rinne 12 ausgebildet ist und an der unteren Schmalseite 15 ist die untere Glasplatte 4 größer als die obere Glasplatte 2 und mit einem Rand nach unten versehen bzw. ist die Unterseite des Glashohlkörpers 6 größer als der Glashohlkörper 6 ausgebildet und mit einem Rand nach unten versehen und bildet somit eine Traufkante 14. Die Längsseite der unteren Glasplatte 4 bzw. des Glashohlkörpers 6 ohne Rinne 12 besitzt am äußeren Rand eine seitliche, nach unten ragende Abdichtkante 13.

An der Unterseite des Solarthermie-Glaselements 1 sind vorteilhaft Einhängeelemente 9 vorgesehen, die gleichzeitig auch zur Befestigung an weiteren Dachelementen genutzt werden können. Darüber hinaus notwendige Befestigungsmittel sind auf Solarthermie-Glaselemente 1 aufgeklebt.

Die untere Glasplatte 4 des Solarthermie-Glaselements 1 bzw. die Unterseite des Glashohlkörpers 6 besitzen vorteilhaft eine aufgeraute Oberfläche zur Sonnenlichtreflexion.

Die obere Glasplatte 2 bzw. der Glashohlkörper 6 kann an der Oberseite die Struktur herkömmlicher Dachziegel besitzt. Das Solarthermie-Glaselement 1 kann eingefärbt und auf der Oberseite kann eine fotografische Abbildung eines Ziegeldachses eingearbeitet sein, um somit die Dachstruktur herkömmlicher Dächer zu imitieren. Diese fotografische Abbildung beispielsweise als Folie kann allerdings auch unter die obere Glasscheibe 2 angeordnet werden oder beim Einsatz von Mehrscheiben-Sicherheitsglas auch zwischen die einzelnen Schichten.

In den Glasplatten 2 und 4 bzw. den Außenwänden, Glasstegen 5 bzw. Glasstützen 5 des Solarthermie-Glaselements 1 sind vorteilhaft zur Verstärkung Metalldrähte, Metallbänder und/oder Metallgeflechte eingelegt. Zudem ist vorgesehen, die jeweiligen Glaselemente wie die Glasplatten 2, 4, die Glasstege 5, 10 und den Glashohlkörper 6 aus Einscheiben-, Zweischeiben- und/oder Mehrscheiben-Sicherheitsglas herzustellen. Durch den Einsatz von Mehrscheibensicherheitsglas lassen sich hohe Stabilitäten bei einer vergleichsweise geringen Gesamtdicke erzielen.

Zur Effizienzsteigerung der Sonnenenergienutzung ist es vorgesehen, dass zumindest Teile der Oberfläche der Solarthermie-Glaselemente 1 mit Photovoltaikzellen versehen sind. Diese können als Folie aufgeklebt oder unmittelbar aufgedruckt sein.

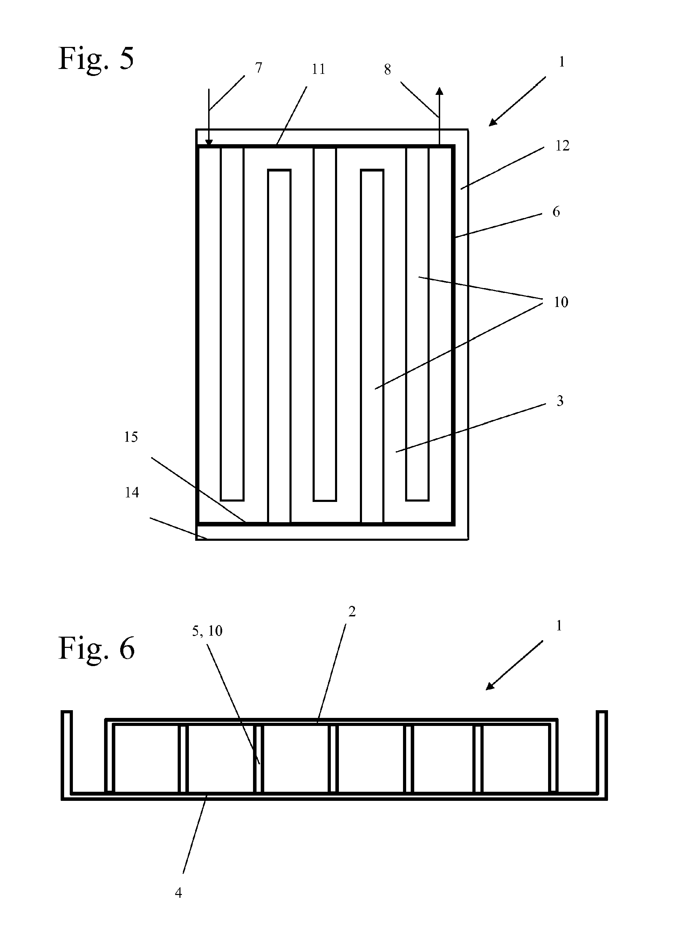

Eine einfache Ausführungsform, wie in Figur 6 dargestellt, sieht vor, dass die untere Glasplatte 4 und die obere Glasplatte 2 jeweils u-förmig ausgebildet sind. Die dabei jeweils seitlich begrenzenden Ränder der unteren Glasplatte 4 und der oberen Glasplatte 2 sind zueinander parallel angeordnet und ausgerichtet. Die obere Glasplatte 2 ist mit den Kanten der parallelen Ränder zwischen den Rändern der unteren Glasplatte 4 und auf die untere Glasplatte 4 angeordnet und befestigt. Somit ist die u-förmig ausgebildete obere Glasplatte 2 in die u-förmig ausgebildete untere Glasplatte 4 zwischen den Rändern angeordnet. Aufgrund dieses Aufbaus lassen sich diese Solarthermie-Glaselemente 1 seitlich nebeneinander auf unterschiedliche Weise anordnen. Zum einen sind die Solarthermie-Glaselemente 1 so nebeneinander angeordnet, dass die Ränder der u-förmig geformten unteren Glasplatte 4 jeweils gleichgerichtet parallel sind. Die beiden nebeneinander liegenden Ränder der Solarthermie-Glaselemente 1 lassen sich mittels diese Ränder überspannende Befestigungsmittel zuverlässig auf dem Dach befestigen sowie zuverlässig abdichten. Alternativ dazu ist eine wechselseitige Anordnung der Solarthermie-Glaselemente 1 vorgesehen. Hierbei greifen die Ränder der sich überlappenden Solarthermie-Glaselemente 1 ineinander.

Die Solarthermie-Glaselemente 1 sind neben der Anwendung als Eindeckung eines Daches zudem auch als Verkleidung von Gebäudewänden einsetzbar. Die dafür notwendigen Befestigungsmittel lassen sich individuell anordnen und aufkleben.

### Zusammenstellung der Bezugszeichen

1 - Solarthermie-Glaselement
2 - obere Glasplatte
3 - Glasrohrsystem
4 - untere Glasplatte
5 - Glasstege, Glasstützen
6 - Glashohlkörper
7 - Eingang des Glasrohrsystems
8 - Ausgang des Glasrohrsystems
9 - Einhängeelemente
10 - Steg
11 - gegenüberliegende Schmalseite
12 - Rinne
13 - Abdichtkante
14 - Traufkante
15 - gegenüberliegende Schmalseite

## Patentansprüche

1. Solarthermie-Glaselement vorzugsweise für die Dacheindeckung,
**dadurch gekennzeichnet,**
**dass** an einer Glasplatte (2) an deren Unterseite ein Glasrohrsystem (3) mit einem Eingang und einem Ausgang fest mit der Glasplatte (2) verbunden ist.

2. Solarthermie-Glaselement nach Anspruch 1,
**dadurch gekennzeichnet,**
**dass** unter dem Glasrohrsystem (3) eine untere Glasplatte (4) fest mit dem Glasrohrsystem (3) verbunden ist.

3. Solarthermie-Glaselement nach einem der vorhergehenden Ansprüche,
dass zwischen den Glasplatten (2, 4) neben den Glasrohren (3) des Glasrohrsystems (3) Glasstege (5) und/oder Glasstützen (5) angeordnet sind, wobei die äußeren Glasstege (5) gleichzeitig die Außenwände des Solarthermie-Glaselementes (1) bilden.

4. Solarthermie-Glaselement vorzugsweise für die Dacheindeckung,
**dadurch gekennzeichnet,**
**dass** das Solarthermie-Glaselement (1) aus einem Glashohlkörper (6) mit einem eingelegten Glasrohrsystem (3) besteht, wobei das Glasrohrsystem (3) mindestens jeweils einen Eingang (7) und einen Ausgang (8) nach außerhalb des Glashohlkörpers (6) besitzt.

5. Solarthermie-Glaselement nach einem der vorhergehenden Ansprüche,
**dadurch gekennzeichnet,**
**dass** die Glasplatte (2) bzw. der Glashohlkörper (6) an der Oberseite die Struktur herkömmlicher Dachziegel besitzt.

6. Solarthermie-Glaselement nach einem der vorhergehenden Ansprüche,
**dadurch gekennzeichnet,**
**dass** das Solarthermie-Glaselement (1) eingefärbt ist und/oder zumindest auf der Oberseite eine fotografische Abbildung eines Ziegeldachses eingearbeitet ist.

7. Solarthermie-Glaselement nach einem der vorhergehenden Ansprüche,
**dadurch gekennzeichnet,**
**dass** in den Glasplatten (2, 4) bzw. Außenwänden, Glasstegen (5) bzw. Glasstützen (5) des Solarthermie-Glaselements (1) Metalldrähte, Metallbänder und/oder Metallgeflechte eingelegt sind.

8. Solarthermie-Glaselement nach einem der vorhergehenden Ansprüche,
**dadurch gekennzeichnet,**
**dass** die untere Glasplatte (4) des Solarthermie-Glaselements (1) bzw. die Unterseite des Glashohlkörpers (6) eine aufgeraute Oberfläche besitzt.

9. Solarthermie-Glaselement nach einem der vorhergehenden Ansprüche,
**dadurch gekennzeichnet,**
**dass** die Rohre (3) des Glasrohrsystems (3) parallel oder mäanderförmig angeordnet sind.

10. Solarthermie-Glaselement nach einem der vorhergehenden Ansprüche,
**dadurch gekennzeichnet,**
**dass** an der Unterseite des Solarthermie-Glaselements (1) Einhängeelemente (9) angeordnet sind.

11. Solarthermie-Glaselement nach Anspruch 4, **dadurch gekennzeichnet,**
**dass** das Glasrohrsystem (3) durch parallel angeordnete Stege (10) innerhalb des Glashohlkörpers (6) gebildet wird, die an den gegenüberliegenden Schmalseiten (11, 15) jeweils mindestens einen Eingang (7) und einen Ausgang (8) besitzen bzw. parallel angeordnete Stege (10) besitzen, die abwechselnd an den Schmalseiten (11, 15) nicht bis an die Außenwand der Gegenseite geführt sind und somit ein mäanderförmiges Rohrsystem (3) innerhalb des Glashohlkörpers (6) bilden.

12. Solarthermie-Glaselement nach einem der vorhergehenden Ansprüche,
**dadurch gekennzeichnet,**
**dass** die untere Glasplatte (4) größer als die obere Glasplatte (2) und mit einem Rand nach oben versehen ist bzw. die Unterseite des Glashohlkörpers (6) größer als der Glashohlkörper (6) ausgebildet ist und mit einem Rand nach oben versehen ist und zwar in der Form, dass an der oberen Schmalseite (11) und an einer Längsseite eine Rinne (12) ausgebildet ist und an der unteren Schmalseite (15) die untere Glasplatte (4) größer als die obere Glasplatte (2) und mit einem Rand nach unten versehen ist bzw. die Unterseite des Glashohlkörpers (6) größer als der Glashohlkörper (6) ausgebildet ist und mit einem Rand nach unten versehen ist und somit eine Traufkante (14) bildet und die Längsseite der unteren Glasplatte (4) bzw. des Glashohlkörpers ohne Rinne (12) am äußeren Rand eine seitliche, nach unten ragende Abdichtkante (13) besitzt.

13. Solarthermie-Glaselement nach einem der vorhergehenden Ansprüche,
**dadurch gekennzeichnet,**
**dass** zumindest Teile der Oberfläche des Solarthermie-Glaselements (1) mit folienartigen und/oder aufdruckbaren Photovoltaikzellen versehen sind.

14. Solarthermie-Glaselement nach einem der vorhergehenden Ansprüche,
**dadurch gekennzeichnet,**
**dass** die untere Glasplatte (4) und die obere Glasplatte (2) jeweils u-förmig ausgebildet sind, wobei die jeweils seitlich begrenzenden Ränder der unteren Glasplatte (4) und der oberen Glasplatte (2) zueinander ausgerichtet und parallel angeordnet sind und die obere Glasplatte (2) zwischen die Ränder der unteren Glasplatte (4) auf der unteren Glasplatte (4) angeordnet ist.

15. Solarthermie-Glaselement nach einem der vorhergehenden Ansprüche,
**dadurch gekennzeichnet,**
**dass** das Solarthermie-Glaselement (1) mit seinen Glasplatten (2, 4), Glasstegen (5, 10) und dem Glashohlkörper (6) aus einem Einscheiben-, Zweischeiben- und/oder Mehrscheiben-Sicherheitsglas besteht.
